# EUROPEAN PATENT APPLICATION

(11) **EP 0 697 670 A1**
(43) Date of publication of application: **21.02.1996**
(21) Application number: 95305548.0
(22) Date of filing: 09.08.1995
(51) Int. Cl.: G06F 17/60, H04Q 7/22, H04B 1/38

(54) **A small domain communications system for personalized assistance**

(30) Priority: 19.08.1994 US 293857
(71) Applicant: AT&T Corp., New York, NY 10013-2412 (US)
(72) Inventor: Asthana, Abhaya, Berkeley Heights, New Jersey 07922 (US); Krzyzanowski, Paul, Fanwood, New Jersey 07023 (US)
(74) Representative: Buckley, Christopher Simon Thirsk

(57) **Abstract**

A method of providing information to a customer of an establishment which hosts members of the public, wherein a customer at the public establishment may communicate with a centralized server (10) associated with the public establishment through a portable wireless communication device (20a,20b,20c). The server (10) includes at least one general database containing information pertaining to products or services offered by the public establishment and a database comprised of personalized customer profiles for each regular customer of the establishment. The server receives inquiries from the customer through the portable communication device and transmits responses thereto back to the communication device. The server may also compare a first set of information contained in the general database with a second set of information contained in the customer profile corresponding to the particular customer to determine similarities between the sets of information, retrieve information from the general database and customer profile based upon said similarities and transmit the retrieved information to the customer through the communication device.

## Description

### BACKGROUND OF THE INVENTION

### FIELD OF THE INVENTION

The present invention relates to communication systems, and more particularly to a wireless communication system between a centralized server of a public establishment and a plurality of remote, portable communication devices operated by customers of that public establishment.

### DESCRIPTION OF THE RELATED ART

Typically, most retail and service establishments interface with their customers through customer representatives of the establishment. Often, to the customer's chagrin, there are a limited number of representatives and the customer may have to wait for a representative of the establishment to become available in order to obtain a response to an inquiry or to obtain service. Customers may often become frustrated by the inefficient waste of time to determine the location of or the price of certain merchandise within the establishment.

Additionally, the establishment may wish to advertise special merchandise or services to its on-site customers. The current methods of doing so typically rely upon public address systems or programmable displays in the aisles of the establishment. Such methods, however, may not be effective means of advertising due to high levels of noise, distractions or the impersonal nature of the advertisement.

### SUMMARY OF THE INVENTION

It is therefore a representative advantage of the present invention to provide customers of an establishment with an assistance service which personalizes the attention provided to a customer based upon that customer's individual needs.

It is another representative advantage of the present invention to provide such personalized assistance services without limiting the customer's movement within the establishment or causing distractions to other customers within the establishment.

A further representative advantage of the present "invention is to provide a customer of an establishment with personalized attention based upon that customer's individual needs and the customer's profile accumulated over time from prior visits to the establishment.

Still another representative advantage of the present invention is to provide the customer with a wireless, portable, hand-held device for communicating with the server that is simple to use and relatively inexpensive.

To achieve the above-mentioned and other advantages, the present invention provides a method of providing information to a customer of an establishment which hosts members of the public, wherein a customer at the public establishment may communicate with a server associated with the public establishment through a portable wireless communication device. The server includes at least one general database containing information pertaining to products or services of the public establishment. The server may then search the general database for information, retrieve the information from the database, and transmit the retrieved information to the customer through the communication device.

### BRIEF DESCRIPTION OF THE DRAWINGS

FIG. 1 is an diagram illustrating the use of the present invention in a retail establishment.

FIG. 2 is a diagram illustrating the portable hand-held communication device of the present invention.

FIG. 3 is a block diagram illustrating the basic operation of the portable hand-held communication device shown in FIG. 2.

FIG. 4 is a block diagram illustrating the basic operation of the portable hand-held communication device shown in FIGS. 2 and 3.

FIG. 5 is block diagram illustrating the basic components of a preferred embodiment of the server of the present invention.

### DESCRIPTION OF THE PREFERRED EMBODIMENTS

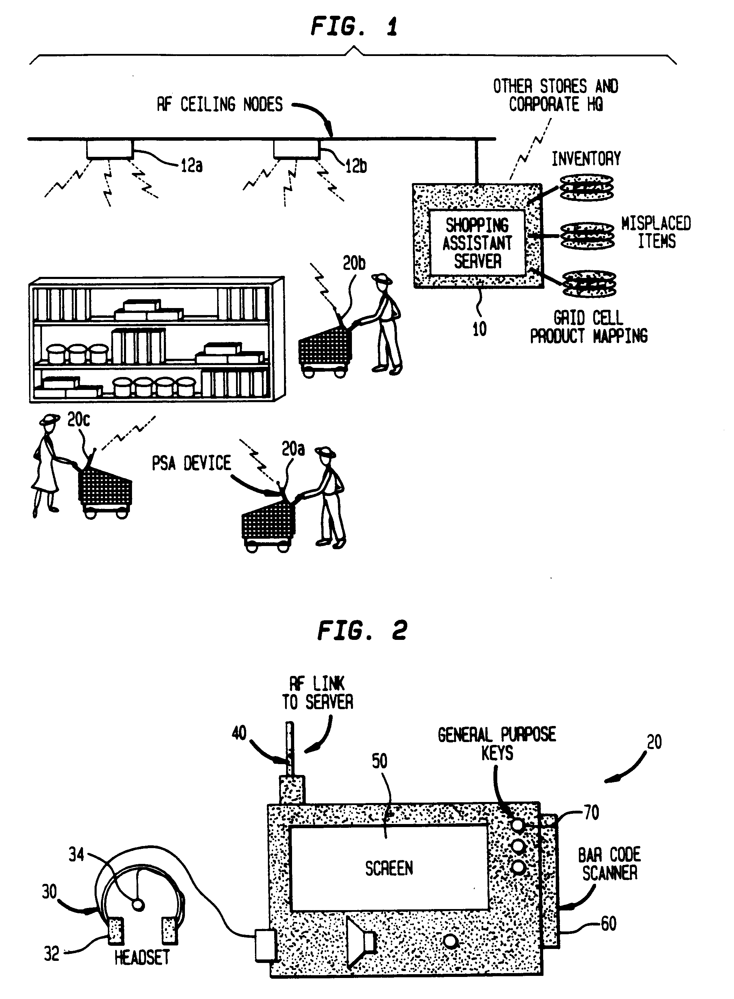

Referring to the drawings, FIG. 1 is illustrative of a preferred embodiment of the present invention. FIG. 1 illustrates use of a wireless communication system for personalized assistance by customers of a public establishment, such as a retail store. The system utilizes a centralized customer assistance server 10 located at the establishment, which is a computer designed to interface with remote, portable communication devices 20a, 20b, 20c, etc.

Each of the remote, portable communication devices 20a, 20b, 20c, etc., may be used by an individual customer at the establishment, as is illustrated in FIG. 1. The portable communication device 20 becomes the customer's personalized assistant while the customer remains in or about the establishment. The communication device 20 may, among other things, provide the customer with information to guide the customer through the establishment, provide details regarding merchandise of interest, identify merchandise that is on sale, provide information on the current price of a particular item, provide information on the location of a particular item within the establishment, compare the price of competing merchandise within the establishment, or identify specific merchandise that the particular customer was looking for on a prior visit to the establishment but that was unavailable.

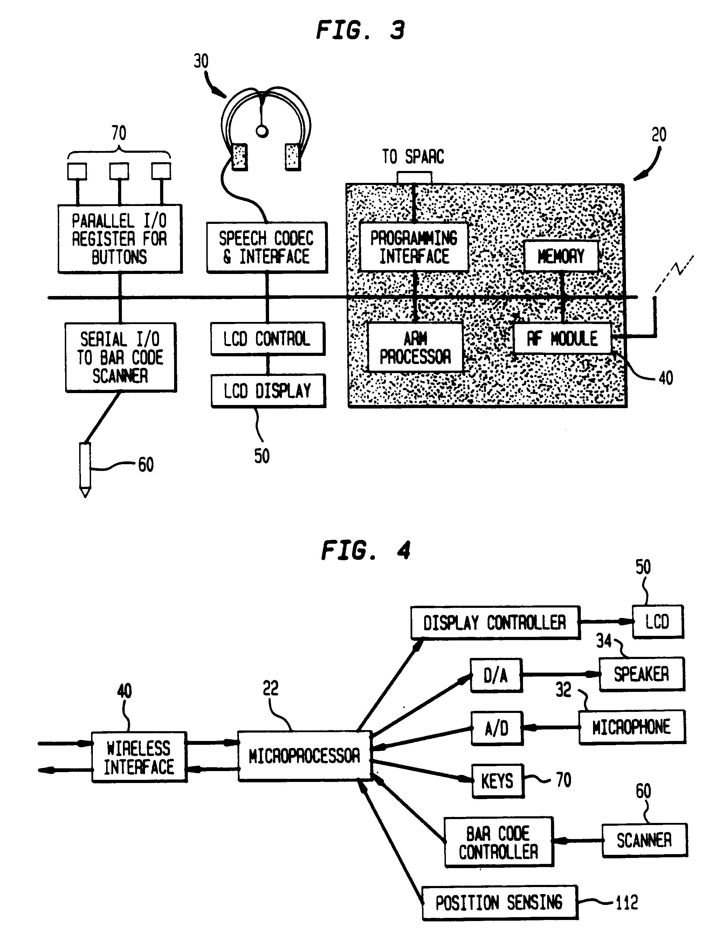

Referring to FIGS. 2 and 3, the communication device 20 is a high volume, hand-held wireless unit that may either be owned by the customer and brought to the establishment or provided to the customer upon entering the establishment. The communication device 20 permits an individual customer to communicate with the establishment's centralized server 10 on an individual basis to obtain information pertaining to the establishment.

The communication device 20 is essentially an input/output device and performs no significant computation or data processing itself. In a preferred embodiment, the communication device 20 includes a number of user inputs, such as a microphone 34, a scanning device 60 and function keys 70. The communication device 20 also includes a number of user outputs, such as a speaker 32 and a display 50.

In a preferred embodiment of the present invention, a headset 30 may be worn by the customer utilizing the communication device 20. The headset 30 may include at least one speaker 32 and a microphone 34. Any of a number of commercially available headsets may be utilized in conjunction with the device 20, such as a GN Netcom ADII-3160 Binaural Headband, Noise Cancelling.

Preferably, the communication device 20 also includes a screen or display 50, which may be a relatively large, commercially available, dot-matrix LCD display such as a Sharp LCD Display Model LM32008F.

In addition, the communication device 20 may further comprise a scanning device 60, such as a laser LED bar code scanner, magnetic strip reader, or the like. In a preferred embodiment of the present invention, Opticon's commercially available Bar Code Scanner Model MSH-19 was used in conjunction with the communication device 20.

The communication device 20 also contains a microprocessor 22 as shown in FIG. 4. The microprocessor 22 is responsible for processing the protocols involved in setting up a virtual circuit to the server 10. The microprocessor 22 also performs compression/decompression of audio input/output to and from the communication device 20. The microprocessor 22 is further responsible for directing messages to the appropriate outputs of the communication device 20. Finally, the microprocessor 22 properly tags messages from inputs to the communication device 20 before transmitting the same to a wireless interface 40, which will be further described below.

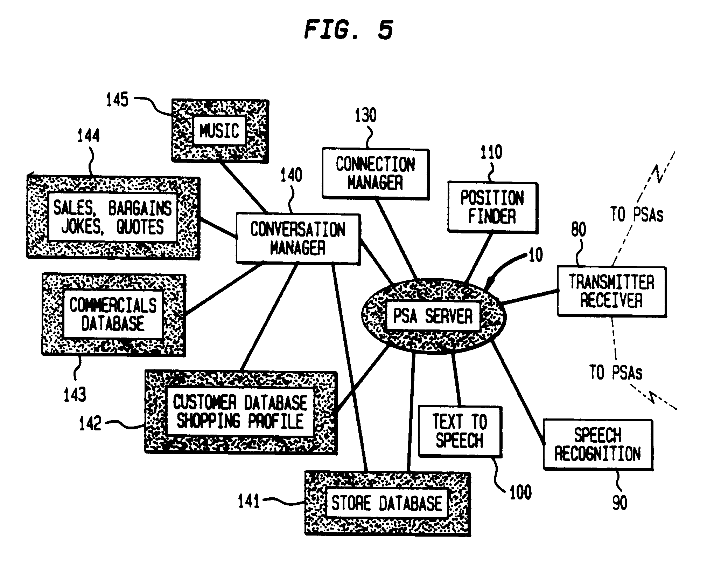

Referring to FIGS. 1 and 5, the server 10 is the heart of the present invention. The functionality of the communication device 20 is predominantly determined by the server 10. The server 10 is a computer that receives inquiries from the customer through the communication device 20, processes information obtained from the inquiries, and transmits responses to the inquiries back to the customer through the communication device 20.

FIG. 5 illustrates the functional architecture of the server 10. Each of the illustrated boxes in FIG. 5 describe hardware or software that collectively provide service to the customer through the communication device 20.

The transmitter and receiver box 80 represents the wireless network subsystem that sends and receives information to and from the communication device 20. In the preferred embodiment of the present invention, the wireless system employs a micro-cellular architecture that minimizes overall system bandwidth consumption while supporting a multitude of communication devices 20 simultaneously accessing the server 10 in a small domain. The micro-cellular architecture also serves to lower power consumption for the communication device 20. Each communication device 20 is equipped with an analog radio frequency transceiver (RF Module) 40 which transmits and receives information to and from the transmitter and receiver 80 of the server 10, as illustrated in FIGS. 2, 3 and 4.

Referring to FIG. 5, the server 10 also includes a Connection Manager 130 which controls the allocation of all video and audio channel bandwidth.

Referring now to FIGS. 1, 4 and 5, the server 10 includes a position finder 110 which interfaces with the position sensing hardware 112 of the communication device 20 so that the server 10 may keep track of the location of an active customer by means of the position broadcast of the communication device 20. To accomplish this task, the communication device 20 includes a position sensing receiver 112 which receives signals from a plurality of location beacons 12a and 12b and triangulates the signals to determine the approximate location of the portable communication device 20 relative to the position beacons 12a, 12b within the establishment.

Referring now to FIGS. 2-5, the server 10 also includes a speech recognition unit 90 which recognizes a limited vocabulary of words and phrases in near real time. Thus, in a preferred embodiment of the present invention, the customer may issue voice queries to the server 10 through the microphone input 32 of the communication device 20. The voice queries are transmitted from the communication device 20 to the server 10 through the above-described wireless network.

By virtue of the speech recognition unit 90, the server 10 utilizes word spotting to communicate with the customer. Since most retail establishments deal with a limited volume of merchandise, a high level of sophistication of speech recognition is not required. Instead, the speech recognition may be limited to the nouns associated with the merchandise carried by the establishment. Thus, information regarding the location or price of a product may be transmitted by the server 10 to the customer through the communication device 20.

Referring to FIG. 5, the server 10 also includes a number of databases. The Customer Database 142 maintains the personalized profile of every registered customer. This database is modified and updated by the system based upon each interaction with the customer.

The Commercials Database 143 is a repository of audio and video strips that can be played on demand or using a directed sales scheme for product promotion.

The Store Database 141 contains the price and inventory of the merchandise carried by the retail establishment. Based upon customer inputs, an order placement record can be created to facilitate ordering of merchandise that is out-of-stock, high demand merchandise, or merchandise requested that is currently not sold by the establishment.

The Sales, Bargains, Jokes, Quotes Database 144 contains video and audio clips that may be scanned or played by the customer for his or her amusement or to promote sales. The Music Database 145 contains music which may be transmitted to the speaker 32 of the communication device 20 for the customer's listening benefit.

The server 10 also includes a Conversation Manager 140 which is responsible for the entire session with the customer. The Conversation Manager 140 is the main process that invokes the services of other subsystems as necessary to serve a customer whose session it is controlling.

The server 10 also includes a text-to-speech unit 100 which enables the server 10 to play back the audio streams composed by the Conversation Manager 140 for individual customers.

In a preferred embodiment of the present invention, a customer of an establishment may scan an identification card through the scanning device 60 of the communication device 20 to enable the server 10 to access that particular customer's shopping profile 142. Thereupon, the communication device 20 may guide the customer through the retail establishment and respond to inquiries made by that customer.

The customer may then speak a word or phrase into the microphone 32 of the communication device 20, scan a product through the scanning device 60, depress one or more of the function keys 70, or a combination of the above in order to request certain information regarding merchandise within the establishment, such as location or price.

After processing the customer's request, the server 10 may then transmit an audio and/or a visual response back to the communication device 20 which will be heard through speaker 32 or displayed on display 50 of the communication device 20.

By scanning the bar codes of selected merchandise through the scanning device 60, the server 10 may also keep a running total of all items purchased by the customer and the total dollar amount of purchases by that customer. Upon the customer's request, this total may appear on the display 50. The server 10 may also query the customer whether a scanned item should be tallied to the total.

Through use of the pre-programmed function keys 70 on the communication device 20, the customer may also add or delete items from the running total maintained by the server 10. The customer may also request more information regarding a specific product whose bar code was scanned by the scanning device 60 by selecting a pre-programmed function key 70.

Moreover, the server 10 may also communicate with the customer regarding the marketing of specific merchandise which may appear to be of interest to the customer, based upon the customer's specific shopping profile, location within the establishment or direct prompt from the customer. Furthermore, the server 10 may casually survey the customer regarding specific shopping preferences since the customer may be more prone to answer casual questions while at the same time shopping within the retail establishment.

While the preferred embodiment of the present invention as described above is intended for shopping within a retail establishment, the present invention may also be utilized in other environments. For instance, the present invention could be expanded to operate in a mall with the portable communication device 20 being passed from a server 10 in one establishment to a server 10' in another establishment (not shown).

Yet another environment in which the present invention may operate is in a museum. Presently, many museums offer tour guides or self-guided audio-cassette based tours that require the user to follow a prescribed course within the museum. The present invention would free the user to wander from exhibit to exhibit, room to room, while providing the user with information regarding each exhibit by keeping track of the user's location within the museum via the above-described position sensing function 110 and 112 of the server 10 and communication device 20 respectively.

Still other applications in which the present invention may operate include hospital assistance in a medical center, continuous access to transitory data such as large commercial databases (news, financial information, traffic, mail, etc.), navigation within buildings or parking lots, customer sampling/preview of videos or compact discs prior to purchase, communication based upon a customer's native language, and many other applications too numerous to recite herein.

The many features and advantages of the present invention are apparent from the detailed specification, and thus, it is intended by the appended claims to cover all such features and advantages of the invention which fall within the true spirit and scope of the present invention. Furthermore, since numerous modifications and variations will readily occur to those skilled in the art, it is not desired to limit the present invention to the exact construction and operation illustrated and described herein, and accordingly, all suitable modifications and equivalents which may be resorted to are intended to fall within the scope of the claims.

## Claims

1. A method of providing information to a customer of an establishment which hosts members of the public, the customer, when at the public establishment, communicating with a server associated with the public establishment using a portable wireless communication device, the server including at least one database which contains personalized customer profiles for registered customers of the establishment, the method comprising the steps of:
(a) searching the customer profile database for information corresponding to the particular customer using the portable device;
(b) retrieving the information; and
(c) transmitting the retrieved information to the communication device.

2. A method according to claim 1, comprising the steps of:
(a) receiving a request for information from the portable communication device; and
(b) processing the request based upon information contained in the corresponding customer profile database.

3. A method according to claim 1, wherein the customer communicates with the server by scanning an identification code with a scanning device communicatively connected to the portable communication device.

4. A method of providing information to a customer of an establishment which hosts members of the public, the customer, when at the establishment, communicating with a server associated with the public establishment through a portable wireless communication device, the server including at least one database which contains information pertaining to products or services of the public establishment, the method comprising the steps of:
(a) searching the database for information;
(b) retrieving information from the database; and
(c) transmitting the retrieved information to the communication device.

5. A method of providing information to a customer of an establishment which hosts members of the public, the customer, when at the public establishment, communicating with a server associated with the public establishment through use of a portable wireless communication device, the server including at least one general database which contains information pertaining to products or services of the public establishment, the server further including a database comprised of personalized customer profiles for each regular customer of the establishment, the method comprising the steps of:
(a) comparing a first set of information contained in the general database with a second set of information contained in the customer profile corresponding to the particular customer to determine similarities between the sets of information;
(b) retrieving information from the general database and customer profile based on said similarities; and
(c) transmitting the retrieved information to the communication device.

6. A method according to claim 1, 4 or 5, comprising the step of displaying the retrieved information on a screen of the portable communication device.

7. A method according to claim 1, 4 or 5, comprising the step of transmitting the retrieved information to the customer through an audio output of the portable communication device.

8. A method according to claim 4 or 5, wherein the customer communicates with the server by scanning the product's identification code with a scanning device communicatively connected to the portable communication device.

9. A method according to claim 1, 4 or 5, wherein the customer communicates with the server by speaking into a microphone connected to the portable communication device, and wherein the server comprises a speech recognition unit for processing the audible communication from the customer.

10. A method according to claim 1, 4 or 5, wherein the customer communicates with the server by selecting a function key located on the portable communication device which is pre-programmed to perform a desired function.

11. A method according to claim 1, 4 or 5, comprising the step of determining the location of the portable communication device relative to the server.

12. A method according to claim 11, wherein the location of the portable communication device relative to the server is determined by transmitting signals from external beacons, receiving the signals by the portable communication device, and triangulating the signals to determine the relative location of the portable communication device.

13. A method according to claim 12, wherein the portable communication device comprises an analog radio frequency transceiver for receiving the signals from the external beacons.

14. The method according to claim 1, 4 or 5, wherein the portable communication device communicates with the server over a wireless network.

15. A method according to claim 14, wherein the portable communication device comprises an analog radio frequency transceiver for communicating with the server.
